# EUROPÄISCHE PATENTSCHRIFT

(11) **EP 0 848 139 B1**
(45) Veröffentlichungstag und Bekanntmachung des Hinweises auf die Patenterteilung: **12.06.2002**
(21) Anmeldenummer: 97120759.2
(22) Anmeldetag: 26.11.1997
(51) Int. Cl.: F01L 1/02, F16H 7/18

(54) **Vormontierte Zugmitteltriebeinheit**
Preassembled transmission unit
Ensemble de transmission pré-assemblé

(30) Priorität: 16.12.1996 DE 29621831 U
(43) Veröffentlichungstag der Anmeldung: 17.06.1998
(73) Patentinhaber: JOH. WINKLHOFER & SÖHNE GmbH & Co KG, D-81369 München (DE)
(72) Erfinder: Bachmair, Peter, 81371 München (DE)
(74) Vertreter: Grünecker, Kinkeldey, Stockmair & Schwanhäusser Anwaltssozietät

(56) Entgegenhaltungen:
- EP-A- 0 188 951
- DE-A- 4 025 126
- FR-A- 2 644 514

## Beschreibung

Die Erfindung bezieht sich auf eine vormontierte Zugmitteltriebeinheit mit mindestens zwei Zugmittelrädern, einem gemeinsam um die Zugmittelräder herumgelegten Zugmittel und einer Haltevorrichtung zum Vorpositionieren der Zugmittelräder mit herumgelegtem Zugmittel relativ zueinander für die Montage, wobei Haltetaschen für jedes Zugmittelrad an der Haltevorrichtung vorgesehen sind, die zumindest einen Umfangsbereich des jeweils zugeordneten Zugmittelrades derart umgeben, daß die Zumittelräder radial zu ihren Drehachsen in die Haltetaschen einlegbar sind.

Eine solche vormontierte Zugmitteltriebeinheit ist z.B. aus US-A-4879977 bekannt. Bei dieser Vorrichtung werden zwei Zahnräder von einer entsprechend ausgeformten Führungsplatte auf Abstand gehalten. Damit die Zahnräder in den entsprechenden Aussparungen dieser Führungsplatte angeordnet werden können, darf die Kette noch nicht geschlossen sein. Diese wird nach dem Einlegen der Zahnräder in die entsprechenden Aussparungen um diese herumgelegt und verschlossen.

In der nachveröffentlichten EP 0 823 543 A1 ist eine Kettentrieb-Einheit für eine Brennkraftmaschine beschrieben. Bei dieser wird ein Antriebsritzel in einer Aussparung eines aus Schienen gebildeten Bauteils angeordnet. Die beiden Schienen sind über Verbindungswände verbunden, die an einem Ende jeweils eine Rastzunge aufweisen. Durch die Rastzungen werden die Bunde des Antriebsritzels in der Aussparung gehalten. Das Abtriebsrad wird durch die herumgelegte Kette gehalten. Das Antriebsritzel wird zusammen mit der Kette von unten her in das Schienenbauteil eingeschoben. Hierbei federn die Rastzugen zunächst nach außen und verrasten dann hinter den Bunden des Antriebsritzels.

Andere Möglichkeiten bestehen darin, z.B. die Führungsplatte mehrteilig auszubilden, siehe z. B. US-A-4869708 oder EP-A-0280365, so dass ein Anordnen der Zugmittelräder auch mit schon bereits herumgelegtem Zugmittel, insbesondere einer bereits geschlossenen Kette, durchgeführt werden kann.

Darüber hinaus ist aus der DE-OS-4025126 eine Montagevorrichtung bekannt, bei der sämtliche für einen Kettentrieb benötigten Elemente auf einer Montageplatte aufgesteckt werden. Der so vorpositionierte Kettentrieb kann dann in enge Einbauverhältnisse bei einem Motor eingeführt und nach Positionieren der Zahnräder auf die zugehörigen Achszapfen wieder herausgezogen werden. Der Nachteil dieser Vorrichtung besteht allerdings darin, daß die Zahnräder nicht absolut sicher auf der Platte gehaltert sind, da sie durch versehentliches Anstoßen beim Montagevorgang aus den Schnapphalterungen herausgleiten können. Des weiteren wird die bei dieser Vorrichtung verwendete Schnapphalterung symmetrisch zu den Achsen der Zahnräder ausgebildet, so daß ein vermehrter Platzaufwand im unmittelbaren Bereich der Zahnräder notwendig ist. Hierdurch läßt sich diese Vorrichtung auch nur zur Montage und anschließendem Entfernen heranziehen.

Es ist nunmehr die Aufgabe der vorliegenden Erfindung eine vormontierte Zugmitteltriebeinheit der eingangsgenannten Art bereitzustellen, die auf einfache Weise zur Montage vorpositioniert werden kann und eine stabile Halterung der Zugmittelräder garantiert.

Diese Aufgabe wird erfindungsgemäß dadurch gelöst, daß zumindestens einer Haltetasche mindestens ein Rasthalteelement zugeordnet ist, das im wesentlichen in Achsrichtung des Zugmittelrades zum Einlegen des Zugmittelrades durch eine vorbestimmte Montagekraft bewegbar ist und das im unbelasteten Zustand einen Umfangsbereich des Zugmittelrades formschlüssig umgibt und dieses unverlierbar in der Haltetasche positioniert.

Gegenüber bisher verwendeten Zugmitteltriebeinheiten, die als Kompletteinheit an die Brennkraftmaschine angebaut worden sind, hat die vorliegende Erfindung den Vorteil, daß die Haltevorrichtung einteilig ausgebildet ist und dennoch die Möglichkeit besteht die Zugmittelräder mit bereits herumgelegtem und geschlossenem Zugmittel an dieser anzuordnen. Gegenüber Montagevorrichtungen zum späteren Entfernen hat die vorliegende Erfindung dahingegen den Vorteil, daß sie unverlierbar die Zugmittelräder in ihrer Position arretiert, so daß auch ungewollte, störende Krafteinflüsse bei der Handhabung der Einheit nicht zum Herausfallen der Zugmittelräder aus den Haltetaschen führen. Die Zugmittelräder sind somit sicher an der erfindungsgemäß ausgestalteten Haltevorrichtung positioniert Darüber hinaus läßt sich die Einheit gemäß der Erfindung in aller Regel so ausgestalten, daß sie mit einem einzigen Rasthalteelement auskommt, um diese Verriegelungsfunktion zu erzielen. Hierdurch ergibt sich ein wesentlich geringerer Aufwand bezüglich der bekannten Vorrichtungen.

Günstigerweise kann das Rasthalteelement einen federnd angeordneten Rampenbereich aufweisen, über den das Zugmittelrad beim Einlegen in die Haltetaschen hinweggleitet und das Rasthalteelement dadurch im wesentlichen in Achsrichtung des Zugmittelrades einfedert. Der Rampenbereich verläuft also zur Haltetasche hin ansteigend, so daß das Rasthalteelement niedergedrückt werden kann, wenn ein Zugmittelrad auf die Haltevorrichtung aufgelegt und anschließend radial auf die Haltetasche zubewegt wird. Das Zugmittelrad selbst sorgt also dafür, daß das Rasthalteelement beim Einführen in die Haltetasche entsprechend in seine Gebrauchsstellung hochschnappt.

Um möglichst wenig Einbauraum einzunehmen, weist die Haltevorrichtung einen plattenförmigen Grundkörper auf, über dessen vom Grundkörper vorgegebener Plattenebene die Haltetasche und/oder der Rampenbereich des Rasthalteelementes überstehen. Hierdurch können die üblicherweise bei Motoren zur Verfügung stehenden geringen Einbauhöhen eingehalten werden.

Eine besonders einfache Ausführungsform ergibt sich dadurch, daß das Rasthalteelement nach Art einer einseitig mit dem plattenförmigen Grundkörper verbundenen Federzunge ausgebildet ist. Eine solche Ausgestaltung ist auch sehr gut durch Kunststoffspritzgießen herstellbar, indem die Haltevorrichtung entsprechend einteilig mit dem Rasthalteelement ausgestaltet ist. Selbstverständlich kann die Haltevorrichtung aus sämtlichen anderen geeigneten Werkstoffen hergestellt sein.

Vorteilhafterweise kann das Rasthalteelement innerhalb einer Aussparung des Grundkörpers angeordnet sein, die, in der Draufsicht gesehen, eine größere Fläche aufweist als das Rasthalteetement, so daß dieses in die Aussparung einfedem kann. Diese Konstruktionsmaßnahme sorgt dafür, daß möglichst wenig Platz für die Einfederung des Rasthalteelementes benötigt wird, da der Grundkörper nicht hindernd im Wege ist.

Günstige Einfedereigenschaften bei gleichzeitiger Bereitstellung einer großen Anlagefläche an dem Zugmittelrad wird bei einer Ausführungsform dadurch erreicht, daß das Rasthalteelement, in der Draufsicht gesehen, nahezu trapezförmig ausgebildet ist, wobei die kurze Seite die Verbindungsstelle zum Grundkörper darstellt und die lange Seite konvex gekrümmt zur Anlage an einen Umfangsbereich des Zugmittelrades ausgebildet ist.

Eine weitere günstige Ausführungsform sieht vor, daß der Grundkörper parallel neben dem Zugmittel angeordnet ist und sich das Rasthalteelement, ausgehend von der Verbindungsstelle mit dem Grundkörper, zuerst in einer Ebene mit dem Grundkörper verläuft und dann in den Rampenbereich abknickt, dessen Gesamthöhe zwischen halber und ganzer Zugmittelbreite liegt. Hierdurch ergibt sich eine besonders günstige Gestaltungsform der Haltevorrichtung.

Damit eine sehr gute Halterung des Zugmittelrades gewährleistet ist, kann die dem Zugmittelrad zugewandte Seite des Rasthalteelementes zur Vergrößerung der Anlagefläche großflächiger im Vergleich zur Querschnittsfläche des Rampenbereiches ausgebildet sein. Hierdurch wird selbst bei dem in den Aufnahmetaschen möglichen Spiel immer eine einwandfreie Vorpositionierung des Zugmittelrades und Arretieren desselben innerhalb der Haltetasche gewährleistet.

Aus Vereinfachungsgründen kann mindestens eine Haltetasche von mindestens zwei im Abstand zueinander angeordneten Taschenabschnitten gebildet sein, die um die Achse des zugeordneten Zugmittelrades versetzt angeordnet sind. Die Tasche wird hierdurch auf lediglich notwenige Abstützabschnitte reduziert.

Eine varteilhafte Ausgestaltung sieht vor, daß zwei Zugmittelräder auf dem Grundkörper angeordnet sind und das Rasthalteelement symmetrisch zu einer durch die beiden Mittelpunkte der Zugmittelräder verlaufenden Symmetrieachse angeordnet ist.

Bevorzugt können die Zugmittelräder Kettenräder sein und das Zugmittel eine Kette, da die erfindungsgemäße Einheit hauptsächlich Anwendung im Kraftfahrzeugbereich zum Anbau an Brennkraftmaschinen findet, bei denen für bestimmte Zwecke hauptsächlich Ketten eingesetzt werden.

Des weiteren können auf dem Grundkörper weitere Elemente, wie z.B. Spannschienen bzw. Führungsschienen, Zugmittelspanner oder ähnliches, angeordnet sein. Dies bietet die Möglichkeit eine kompakte Einheit vorab zusammenzustellen, die dann einheitlich in einem einzigen Montageschritt an die Brennkraftmaschine angebracht wird.

Des weiteren bezieht sich die Erfindung auf einen Grundkörper für eine Zugmitteltriebeinheit nach einem der Ansprüche 1 bis 13, gekennzeichnet durch mindestens zwei Haltetaschen für Zugmittelräder und mindestens ein zumindest einer Haltetasche zugeordnetes Rastelement, das im wesentlichen in Achsrichtung des Zugmittelrades zum Einlegen des Zugmittelrades durch eine vorbestimmte Montagekraft bewegbar ist und das im unbelasteten Zustand einen Umfangsbereich des Zugmittelrades formschlüssig umgibt und dieses unverlierbar in der Haltetasche positioniert.

Die Erfindung bezieht sich auch auf eine Zugmitteltriebeinheit, insbesondere nach einen der vorangegangenen Ansprüche, bei der an dem Halteelement eine schwenkbar angeordnete Spannschiene angebracht ist und bei der an dem Halteelement und der Spannschiene zusammenwirkende Rasteinrichtungen zum Vorpositionieren der Spannschiene an dem Halteelement in einer Montagestellung derart vorhanden sind, daß die Spannschiene gegenüber Zurückschwenken entgegen der Spannrichtung in der Montagestellung arretiert ist und ein Schwenken der Spannschiene in Spannrichtung in der Montagestellung weiter möglich ist. Für eine derartige Ausgestaltung soll auch unabhängig von den vorangegangenen Ansprüchen selbständig Schutz begehrt werden. Der Vorteil dieser Ausgestaltung liegt darin, daß die Spannschiene unmittelbarer Bestandteil der vormontierten Zugmitteltriebeinheit ist, für die Montage ebenfalls bereits ausreichend vorpositioniert ist und relativ zum Zugmittel gehalten wird. Hierdurch vereinfacht sich die Montage von vormontierten Zugmitteltriebeinheiten um ein wesentliches. Die Rasteinrichtungen müssen so ausgestaltet sein, daß der für die Funktion im späteren Betrieb notwendige Spannweg der Spannschiene erhalten bleibt, aber dennoch eine ausreichende Sicherung und Lagebestimmung der Spannschiene relativ zum Halteelement gegeben ist. Darüber hinaus kann die von den Rasteinrichtungen vorgegebene Montagestellung der Spannschiene relativ zum Halteelement derart gewählt sein, daß die Spannschiene eine Vorspannung auf das Zugmittel ausübt Das Zugmittel wird quasi als Feder herangezogen, um die Spannschiene in ihre Arretierstellung zu drücken, so daß die Spannschiene exakt in einer bestimmten Montagestellung gehalten wird. Die Vorspannung sollte so gewählt werden, daß sie gleich oder geringer ist, wie oder als die minimal gewünschte Spannung des Zugmittels im Betrieb.

Eine relativ einfache Ausführungsform zur Verwirklichung einer derartigen Ausgestaltung ist dadurch gegeben, daß die Rasteinrichtung des Halteelements eine rampenförmige Rastnase ist, deren Hinterschneidung im wesentlichen in Spannrichtung auf das Zugmittel zuweist und daß die Spannschiene eine entsprechende Rastaussparung aufweist, die mit der Rastnase in der Montagestellung verrastbar ist. Für eine solche geometrische Ausformung läßt sich sehr einfach ein Arretieranschlag entgegen der Spannrichtung der Spannschiene erzeugen.

Die für den Rastvorgang notwendige relative Rastbewegung zwischen Halteelement und Spannschiene kann dadurch erfolgen, daß eine Schwenkverbindung zwischen Halteelement und Spannschiene derart ausgeführt ist, daß durch die Spannschiene neben der Schwenkbewegung in Spannrichtung auch eine geringe Schwenkbewegung im wesentlichen senkrecht zur Spannrichtung ausführbar ist, wobei die geringe Schwenkbewegung gerade so groß ist, daß die Rasteinrichtungen miteinander verrastbar sind. Da diese geringe Schwenkbewegung lediglich zu Einrastzwecken ausgeführt wird, weshalb nur geringe Wege zurückgelegt werden müssen, bleibt eine optimale Führungswirkung der Spannschiene erhalten.

Des weiteren kann vorgesehen sein, daß die Schwenkverbindung derart ausgeführt ist, daß die geringe Schwenkbewegung gegenüber einer Federrückstellkraft erfolgt. Hierdurch wird die Spannschiene immer in ihrer Gebrauchslage gehalten und läßt sich nur senkrecht zur Spannrichtung gegenüber der Federrückstellkraft zu Einrastzwecken verschieben.

Im folgenden wird eine Ausführungsform der vorliegenden Erfindung anhand einer Zeichnung näher erläutert. Es zeigen:
- Fig. 1: eine perspektivische Darstellung der erfindungsgemäßen vormontierten Zugmitteltriebeinheit,
- Fig. 2: eine Vorderansicht der Zugmitteltriebeinheit aus Fig. 1,
- Fig. 3: eine Schnittdarstellung der Zugmitteltriebeinheit aus Fig. 2 entlang der Linie A-A geschnitten,
- Fig. 4: eine Rückansicht der Zugmitteltriebeinheit aus Fig. 2,
- Fig. 5: eine zweite Ausführungsform eines Halteelementes mit einer angebrachten, schwenkbaren Spannschiene in einer Vorderansicht,
- Fig. 6: eine Querschnittsansicht des Halteelementes entlang der Linie VI-VI in Figur 5,
- Fig. 7: eine Schwenkstelle des Halteelementes aus Figur 5 ohne Spannschiene in einer Vorderansicht,
- Fig. 8: die Spannschiene aus Figur 5 in einer Rückansicht und
- Fig. 9: die Spannschiene aus Figur 8 in einer teilweise geschnittenen Seitenansicht.

Die in den Figuren dargestellte Zugmitteltriebeinheit ist für einen Ölpumpen-Massenausgleich an einer Brennkraftmaschine vorgesehen. Selbstverständlich können auch andere Anwendungszwecke durch eine solche Einheit erfüllt werden. Die Zugmitteltriebeinheit umfaßt im wesentlichen eine plattenförmige Haltevorrichtung 1, zwei auf dieser im Abstand zueinander angeordnete Kettenräder 2 und 3 und eine geschlossene, um die Kettenräder 2 und 3 herumgelegte Antriebskette 4.

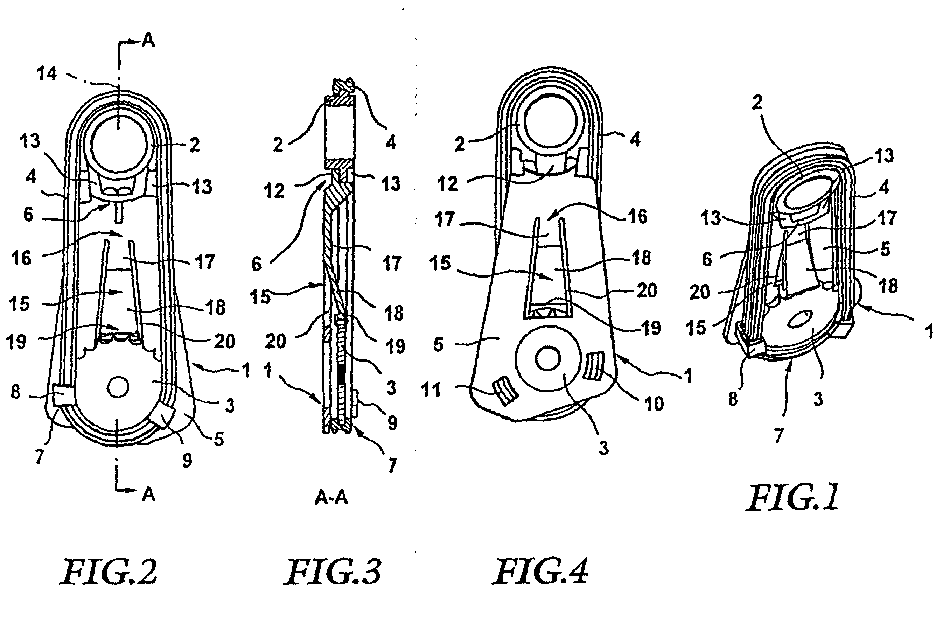

Die Haltevorrichtung 1 besteht aus einem plattenförmigen Grundkörper 5, der parallel zu den Kettenrädern 2 und 3 und der Antriebskette 4 angeordnet ist und jeweils eine Haltetasche 6 für das Kettenrad 2 und eine Haltetasche 7 für das Kettenrad 3 aufweist Beide Einschuböffnungen der Haltetaschen 6 und 7 weisen in dieselbe Richtung. Das bedeutet, entsprechend den Figuren, daß die Kettenräder 2 und 3 von oben nach unten in die Haltetaschen 6 und 7 gemeinsam mit der Antriebskette 4 eingeschoben werden. Die untere Haltetasche 7 für das größere Kettenrad 3 wird lediglich von zwei Taschenabschnitten 8 und 9 gebildet, die im Querschnitt L-förmig ausgestaltet sind. Die Taschenabschnitte 8 und 9 sind weniger als 180 Grad um die Achse des großen Kettenrades 3 versetzt zueinander angeordnet. Des weiteren sind sie so ausgestaltet, daß ein L-Schenkel senkrecht auf dem Grundkörper 5 angeordnet ist, während der andere L-Schenkel die Antriebskette 4 und das große Kettenrad 3 umgreift, so daß ein Aufnahmekanal gebildet ist. Insbesondere anhand der Figur 4 ist zu sehen, daß den Taschenabschnitten 8 und 9 aus fertigungstechnischen Gründen eine Aussparung 10 und 11 zugeordnet ist. Die Haltetasche 6 für das kleine Kettenrad 2 ist durch eine Ausgestaltung nach Art eines Gabelabschnittes ausgeformt, so daß die Zähne des kleinen Kettenrades 2 in die Haltetasche 6 eingreifen und die Zinken 12 und 13 des Gabelabschnittes mit einem Umfangsbereich des Kettenrades 2 in dem gezeigten Montagezustand in Berührung steht. Die beiden Haltetaschen 6 und 7 sind so zueinander ausgerichtet, daß die Antriebskette 4 und die beiden Kettenräder 2 und 3 in einer Ebene positioniert sind.

Des weiteren verfügt die Haltevorrichtung 1 über ein symmetrisch zu einer durch die Mittelpunkte der beiden Kettenräder 2 und 3 verlaufenden Symmetrieachse 14 ausgerichtetes Rasthalteelement 15. Das Rasthalteelement 15 ist nach Art einer Federzunge ausgebildet und weist in der Draufsicht eine annähemde Trapezform auf. Die kürzere Seite 16 der Trapezform bildet den Verbindungsbereich mit dem Grundkörper 5. Das Rasthalteelement 15 ist einteilig mit dem Grundkörper 5 ausgebildet und erstreckt sich zunächst mit einem Abschnitt 17 in einer Ebene mit dem Grundkörper 5 und geht dann in einen Rampenbereich 18 über, der gleichmäßig ansteigt, bis er mindestens die halbe Höhe der Antriebskette 4 überschritten hat. Dadurch befindet sich die lange Seite 19 der Trapezform auf der Höhe der Zähne des großen Kettenrades 3. Diese Seite 19 ist bogenförmig ausgebildet, um einen Außenumfangsbereich des Kettenrades 3 formschlüssig zu umgreifen. Zusätzlich ist die Seite 19 vergrößert ausgebildet, da das Rasthalteelement 15 in diesem Bereich verdickt ausgeführt ist. Hierzu verläuft der unmittelbar an die Seite 19 angrenzende Bereich des Rasthalteelementes 15 ebenfalls parallel, jedoch nur über einen geringen Bereich, zum Grundkörper 5.

In der Draufsicht ist ebenfalls zu erkennen, daß das in der Draufsicht trapezförmige Rasthalteelement 15 innerhalb einer, in der Draufsicht gesehen, ebenfalls trapezförmigen Aussparung 20 angeordnet ist, so daß es uneingeschränkt einfedem kann.

Im folgenden wird die Wirkungs- und Funktionsweise des oben beschriebenen Ausführungsbeispiels näher erläutert.

Für die Vorpositionierung der Kettenräder 2 und 3 und der Antriebskette 4 wird die Haltervorrichtung 1 so positioniert, daß das kleine Kettenrad 2 in die Haltetasche 6 eingelegt werden kann. Anschließend wird die Kette um das kleine Kettenrad 2 herumgelegt und der Rest der Kette wird von dem Grundkörper 5 der Haltevorrichtung 1 gehalten.

Danach führt man das große Kettenrad 3 im Bereich des Rasthalteelementes 15 zwischen die beiden Kettenstränge der Antriebskette 4 ein, bis der Rampenbereich 18 des Rasthalteelementes 15 so weit nach unten gedrückt ist, daß er im wesentlichen parallel zum Grundkörper 5 ausgerichtet ist. Dabei muß darauf geachtet werden, daß das große Kettenrad 3 an der richtigen Stelle in die Antriebskette 4 eingreift. Dieser Vorgang kann allerdings auch schon vorab zusammen mit dem kleinen Kettenrad 2 erfolgen, bevor diese an der Haltevorrichtung 1 positioniert werden.

Abschließend wird das große Kettenrad 3 zusammen mit der Kette 4 in die Haltetasche 7 eingeschoben, bis die Kette 4 an den Taschenabschnitten 8 und 9 anstößt. Gleichzeitig schnappt dann das Rasthalteelement 15 in seine in den Figuren gezeigte Gebrauchsstellung. Hierdurch ist das Kettenrad 3 unverlierbar in der Haltetasche 7 positioniert. Die Antriebskette 4 sorgt dann dafür, daß das kleine Kettenrad 2 ebenfalls unverlierbar in der Haltetasche 6 angeordnet ist.

Eine derartig vormontierte Zugmitteltriebeinheit läßt sich sehr einfach handhaben und ein schnelleres Montieren der Kettenräder 2 und 3 auf der Halteeinrichtung zu, wobei zusätzlich noch eine bessere Verankerung der einzelnen Elemente der Zugmitteltriebeinheit gegeben ist.

Im folgenden wird eine zweite Ausführungsform der erfindungsgemäßen vormontierten Zugmitteltriebeinheit näher erläutert. Da nur auf die wesentlichen Unterschiede zum vorangegangenen Ausführungsbeispiel eingegangen wird, ist die Beschreibung bezüglich gleicher Bezugsziffern analog übertragbar.

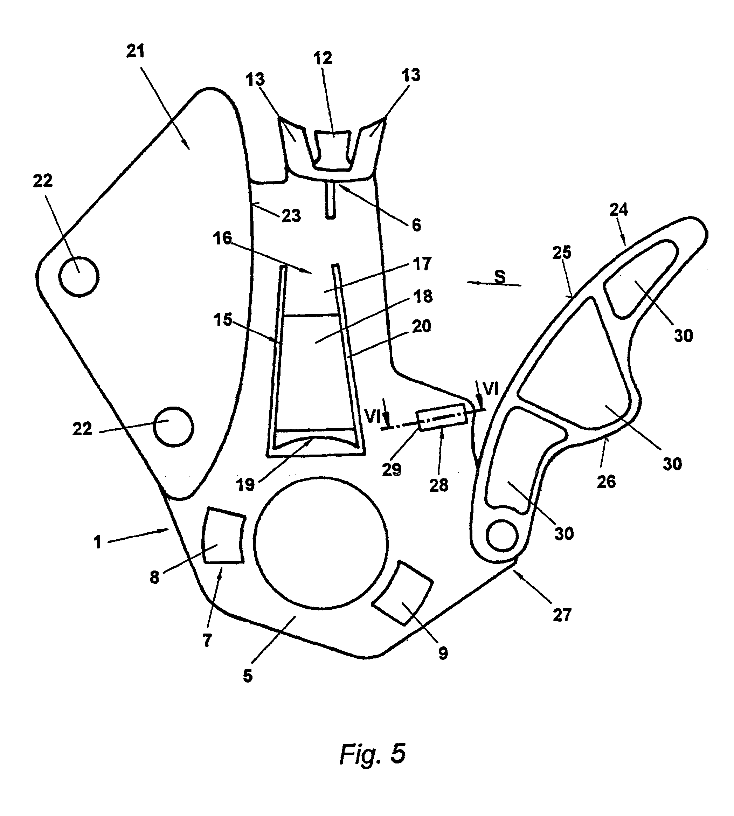

Die Haltevorrichtung 1 weist auf ihrer linken Seite (Figur 5) einen Führungsblock 21 mit zwei im Abstand zueinander angeordneten Befestigungsöffnungen 22 auf. Die Befestigungsöffnungen 22 dienen zum Anbringen an einem Motorblock. Der Führungsblock weist eine bogenförmige Führungsfläche 23 auf, entlang derer die Antriebskette 4, die in der Figur 5 nicht dargestellt ist, geführt ist. Demnach weist der Führungsblock 21 eine Dicke auf, die größer ist als die Dicke des Grundkörpers 5. Des weiteren steht er auf der gleichen Seite über, wie das Rastelement 15. An einer Verbindungstelle 27 ist an dem Grundkörper 5 eine Spannschiene 24 mit bogenförmiger Andrückfläche 25 angeordnet. Die bogenförmige Andrückfläche 25 soll die zur Spannung der Antriebskette notwendige Spannkraft aufbringen. Hierzu weist die Spannschiene 24 weiter eine Ansatzfläche 26 auf, auf die im späteren Einsatz ein Kettenspanner drückt.

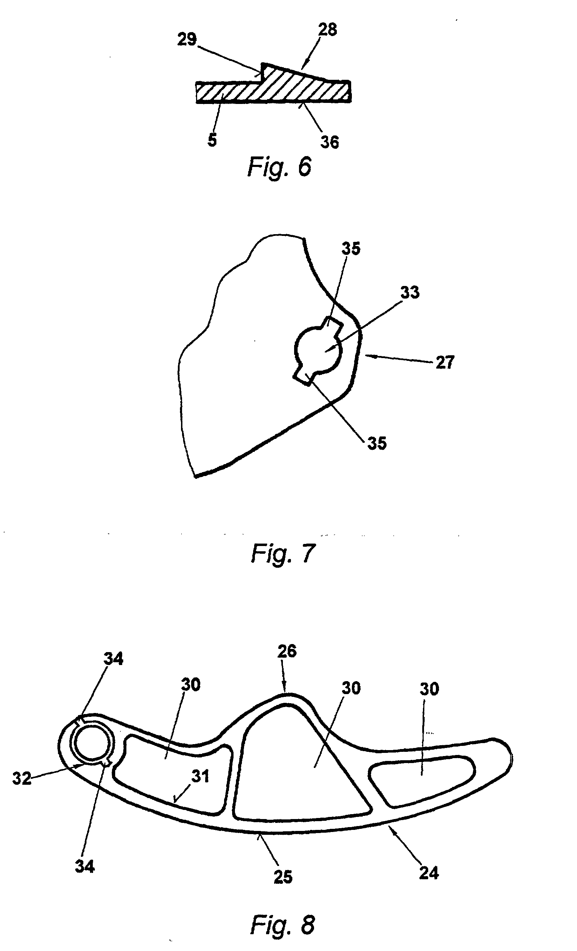

Des weiteren ist auf dem Halteelement 5 im Schwenkbereich der Spannschiene 24 ein rampenförmiges Rastelement 28 vorgesehen, das in der Seitenansicht (siehe Figur 6) dreiecksförmig ausgebildet ist und eine zum Rastelement 15 hinweisende Hinterschneidung 29 umfaßt. Das Rastelement 28 steht auf der gleichen Seite über, wie das Rastelement 15 und ist somit auch auf der Seite der Spannschiene 24 angeordnet. Die Spannschiene 24 weist mehrere Aussparungen 30 auf, die zum einen der Gewichtserspamis und zum anderen, zumindest bereichsweise, als Rastaussparung zum Einrasten des Rastelementes 28 dienen.

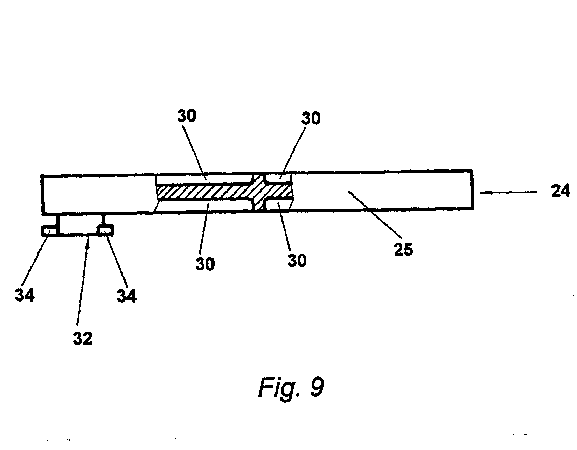

Anhand der Figur 9 ist zu erkennen, daß diese Aussparungen 30 sich nicht über die gesamte Höhe der Spannschiene 24 erstrecken, sondern daß die Spannschiene in ihrem Mittenbereich verschlossen bleibt. In Figur 8 ist mit der Bezugsziffer 31 in etwa die Raststelle gekennzeichnet, die mit dem Rastelement 28 verrastet. Dadurch, daß die Aussparung 30 breiter ist, als die Länge des Rastelementes 28 ist zwar im verrasteten Zustand ein weiteres Verschwenken der Spannschiene 24 in Richtung der Antriebskette möglich, jedoch ein Zurückschwenken lediglich bis zum Anschlagen der Hinterschneidung 29 mit der Raststelle 31 durchführen. Durch das Zusammenwirken von Rastelement 28 und Raststelle 31 ist eine vorgegebene Montagegrundstellung definiert Zusätzlich wird die Spannschiene 24 von der eingelegten Antriebskette in Anlage mit dem Rastelement 28 gedrückt, da diese als Federelement wirkt.

Die Ausgestaltung der Verbindungsstelle 27 erfolgt durch einen besonders ausgestalteten Zapfen 32 an der Unterseite der Spannschiene 24 und einer entsprechend ausgestalteten, durchgehenden Öffnung 33 im Grundkörper 5. Der Zapfen weist an seinem freien Ende zwei diametral gegenüberliegende, über die zylindrische Mantelfläche des Zapfens 32 überstehende Haltearme 34 auf, die einen Abstand zur Unterseite der Spannschiene 24 aufweisen, der geringfügig größer ist, als die Dicke des Grundkörpers 5. Die Öffnung 33 ist so geformt, daß der Zapfen 32 zusammen mit den Haltearmen 34 in einer bestimmten Stellung der Spannschiene 24 durch diese axial hindurchgeführt werden kann. Hierzu weist die Öffnung 33 entsprechende Aussparungen 35 zum Durchführen der Haltearme 34 auf. Wird nach dem Durchführen des Zapfens 32 die Spannschiene 24 um die Verbindungsstelle 27 geschwenkt, so gelangen die Haltearme 34, aufgrund Ihres Abstandes zur Unterseite der Spannschiene 24, auf die Rückseite 36 des Grundkörpers 5. Hierdurch ist die Spannschiene 24 dann sicher an dem Grundkörper 5 befestigt. Die Winkellage der Halterarme 34 am Zapfen 32 und die Winkellage der Aussparungen 35 in der Öffnung 33 am Grundkörper sind so zueinander gewählt, daß die Spannschiene 24 in einer von der Antriebskette entgegen der Spannrichtung S weggeschwenkten Stellung von dem Grundkörper 5 gelöst werden kann (ähnlich der Stellung in Figur 5). Jedoch ist die Befestigung über einen Schwenkbereich sichergestellt, der die Verrastung der Spannschiene 24 mit dem Rastelement 28 und den späteren Einsatz der Spannschiene 24 im Betrieb abdeckt. Des weiteren wirken die Haltearme 34 auch als Federelemente, da die Spannschiene 24 beim Übergleiten des rampenförmigen Rastelementes 28 auch eine leichte Schwenkbewegung senkrecht zur Hauptschwenkrichtung S ausführt Hierzu ist der Abstand der Haltearme 34 zur Unterseite der Spannschiene 24 entsprechend gewählt. Sie bewirken dann ein regelrechtes Einschnappen des Rastelementes 28 mit seiner Hinterschneidung 24 an der Raststelle 31. Durch diese Federwirkung ist auch sichergestellt, daß diese zusätzliche kleine Schwenkbewegung senkrecht zur Hauptschwenkrichtung im wesentlichen nur durch eine gewollte Kraft bewirkt werden kann. Es bedeutet aber auch, daß mit Hilfe einer entsprechenden Querkraft die Spannschiene auch wieder gänzlich zurückgeschwenkt werden kann.

Diese zweite Ausführungsform gewährleistet somit, daß eine vormontierte Zugmitteltriebeinheit incl. Spannschiene 24 und Führungsblock 21 durch einfachste Handhabungsschritte an einem Motorblock anbringbar ist.

## Patentansprüche

1. Vormontierte Zugmitteltriebeinheit mit mindestens zwei Zugmittelrädern (2, 3), einem gemeinsam um die Zugmittelräder (2, 3) herumgelegten Zugmittel (4) und einer Haltevorrichtung (1) zum Vorpositionieren der Zugmittelräder (2, 3) mit herumgelegtem Zugmittel (4) relativ zueinander für die Montage, wobei für jedes Zugmittelrad (2, 3) eine separate Haltetasche (6,7) an der Haltevorrichtung (1) vorgesehen ist, die zumindest einen Umfangsbereich des jeweils zugeordneten Zugmittelrades (2, 3) derart umgeben, daß die Zugmittelräder (2, 3) radial zu ihren Drehachsen in die Haltetaschen (6, 7) einlegbar sind, **dadurch gekennzeichnet, daß** zumindestens einer Haltetasche (7) mindestens ein Rasthalteelement (15) zugeordnet ist, das im wesentlichen in Achsrichtung des Zugmittelrades (3) zum Einlegen des Zugmittelrades (3) in die Haltetasche (7) durch eine vorbestimmte Montagekraft bewegbar ist und das im unbelasteten Zustand einen Umfangsbereich des Zugmittelrades (3) formschlüssig umgibt und dieses unverlierbar in der Haltetasche (7) positioniert.

2. Zugmitteltriebeinheit nach Anspruch 1, **dadurch gekennzeichnet, daß** das Rasthalteelement (15) einen federnd angeordneten Rampenbereich (18) aufweist, über den das Zugmittelrad (3) beim Einlegen in die Haltetaschen (7) hinweggleitet und das Rasthalteelement (15) dadurch im wesentlichen in Achsrichtung des Zugmittelrades (3) einfedert.

3. Zugmitteltriebeinheit nach Anspruch 1 oder 2, **dadurch gekennzeichnet, daß** die Haltevorrichtung (1) einen piattenförmigen Grundkörper (5) aufweist, über dessen vom Grundkörper vorgegebenen Plattenebene die Haltetaschen (6, 7) und/oder der Rampenbereich (18) des Rasthalteelementes (15) überstehen.

4. Zugmitteltriebeinheit nach Anspruch 1 bis 3, **dadurch gekennzeichnet, daß** das Rasthalteelement (15) nach Art einer einseitig mit dem plattenförmigen Grundkörper (5) verbundenen Federzunge ausgebildet ist.

5. Zugmitteltriebeinheit nach einem der Ansprüche 1 bis 4, **dadurch gekennzeichnet, daß** das Rasthalteelement (15) innerhalb einer Aussparung (20) des Grundkörpers (5) angeordnet ist, die, in der Draufsicht gesehen, eine größere Fläche aufweist als das Rasthalteelement (15), so daß dieses in die Aussparung (20) einfedern kann.

6. Zugmitteltriebeinheit nach einem der Ansprüche 1 bis 5, **dadurch gekennzeichnet, daß** das Rasthalteelement (15), in der Draufsicht gesehen, nahezu trapezförmig ausgebildet ist, wobei die kurze Seite (16) die Verbindungsstelle zum Grundkörper darstellt und die lange Seite (19) konvex gekrümmt zur Anlage an einen Umfangsbereich des Zugmittelrades (3) ausgebildet ist.

7. Zugmitteltriebeinheit nach einem der Ansprüche 1 bis 6, **dadurch gekennzeichnet, daß** der Grundkörper (5) parallel neben dem Zugmittel (4) angeordnet ist und sich das Rasthalteelement (15), ausgehend von der Verbindungsstelle (16) mit dem Grundkörper (5), zuerst in einer Ebene mit dem Grundkörper (5) verläuft und dann in den Rampenbereich (18) abknickt, dessen Gesamthöhe zwischen halber und ganzer Zugmittelbreite liegt.

8. Zugmitteltriebeinheit nach einem der Ansprüche 1 bis 7, **dadurch gekennzeichnet, daß** die dem Zugmittelrad (3) zugewandte Seite des Rasthalteelementes (15) zur Vergrößerung der Anlagefläche großflächiger im Vergleich zur Querschnittsfläche des Rampenbereichs (18) ausgebildet ist.

9. Zugmitteltriebeinheit nach einem der Ansprüche 1 bis 8, **dadurch gekennzeichnet, daß** mindestens eine Haltetasche (6) von mindestens zwei im Abstand zueinander angeordneten Taschenabschnitten (8, 9) gebildet ist, die um die Achse des zugeordneten Zugmittelrades (3) versetzt angeordnet sind.

10. Zugmitteltriebeinheit nach einem der Ansprüche 1 bis 9, **dadurch gekennzeichnet, daß** die Taschenabschnitte (8, 9) als im Querschnitt L-förmige, mit einem L-Schenkel auf dem Grundkörper (5) angeordnete Elemente ausgebildet sind, wobei der andere L-Schenkel und der Grundkörper (5) einen Kanal zur Aufnahme des Zugmittelrades (3) mit herumgelegtem Zugmittel (4) umgrenzt.

11. Zugmitteltriebeinheit nach einem der Ansprüche 1 bis 10, **dadurch gekennzeichnet, daß** zwei Zugmittelräder (2, 3) auf der Haltevorrichtung (1) angeordnet sind und das Rasthalteelement (15) symmetrisch zu einer durch die beiden Mittelpunkte der Zugmittelräder (2, 3) verlaufenden Symmetrieachse (14) angeordnet ist.

12. Zugmitteltriebeinheit nach einem der Ansprüche 1 bis 11, **dadurch gekennzeichnet, daß** die Zugmittelräder (2, 3) Kettenräder sind und das Zugmittel (4) eine Kette ist.

13. Zugmitteltriebeinheit nach einem der Ansprüche 1 bis 12, **dadurch gekennzeichnet, daß** auf dem Grundkörper (5) weitere Elemente, wie z.B. Spannschienen bzw. Führungsschienen, Zugmittelspanner oder ähnliches, angeordnet sind.

14. Grundkörper für eine Zugmitteltriebeinheit nach einem der Ansprüche 1 bis 13, **gekennzeichnet durch** mindestens zwei Haltetaschen (6, 7) für Zugmittelräder (2, 3) und mindestens ein zumindest einer Haltetasche (7) zugeordnetes Rasthalteelement (15), das im wesentlichen in Achsrichtung des Zugmittelrades (3) zum Einlegen des Zugmittelrades in die Haltetasche (7) **durch** eine vorbestimmte Montagekraft bewegbar ist und das im unbelasteten Zustand einen Umfangsbereich des Zugmittelrades (3) formschlüssig umgibt und dieses unverlierbar in der Haltetasche (7) positioniert.

15. Zugmitteltriebeinheit, insbesondere nach einem der Ansprüche 1 bis 13, **dadurch gekennzeichnet, daß** an dem Halteelement (1) eine schwenkbar angeordnete Spannschiene (24) angebracht ist, und daß an dem Halteelement (1) und der Spannschiene (24) zusammenwirkende Rasteinrichtungen (28, 30) zum Vorpositionieren der Spannschiene (24) an dem Halteelement (1) in einer Montagestellung derart vorhanden sind, daß die Spannschiene (24) gegenüber Zurückschwenken entgegen der Spannrichtung (S) in der Montagestellung arretiert ist und ein Schwenken der Spannschiene (24) in Spannrichtung (S) in der Montagestellung weiter möglich ist.

16. Zugmitteltriebeinheit nach Anspruch 15, **dadurch gekennzeichnet, daß** die von den Rasteinrichtungen (28, 30) vorgegebene Montagestellung der Spannschiene (24) relativ zum Halteelement (1) derart gewählt ist, daß die Spannschiene (24) eine Vorspannung auf das Zugmittel (4) ausübt.

17. Zugmitteltriebeinheit nach Anspruch 15 oder 16, **dadurch gekennzeichnet, daß** die Rasteinrichtung (28) des Halteelementes (1) eine rampenförmige Rastnase ist, deren Hinterschneidung (29) im wesentlichen in Spannrichtung (S) auf das Zugmittel (4) zuweist und daß die Spannschiene (24) entsprechend der Rastaussparung (30) aufweist, die mit der Rastnase (28) in der Montagestellung verrastbar sind.

18. Zugmitteltriebeinheit nach einem der Ansprüche 15 bis 17, **dadurch gekennzeichnet, daß** eine Schwenkverbindung (27) zwischen Halteelement (1) und Spannschiene (24) derart ausgeführt ist, daß durch die Spannschiene (24) neben der Schwenkbewegung in Spannrichtung (S) auch eine geringe Schwenkbewegung im wesentlich senkrecht zur Spannrichtung (S) ausführbar ist, wobei die geringe Schwenkbewegung gerade so groß ist, daß die Rasteinrichtungen (28, 30) miteinander verrastbar sind.

19. Zugmitteltriebeinheit nach Anspruch 18, **dadurch gekennzeichnet, daß** die Schwenkverbindung (27) derart ausgeführt ist, daß die geringe Schwenkbewegung gegenüber einer Federrückstellkraft erfolgt.

## Claims

1. Preassembled traction means transmission unit with at least two traction means wheels (2, 3), a traction means (4) placed jointly around the traction means wheels (2, 3) and a holding device (1) for pre-positioning the traction means wheels (2, 3) with the traction means (4) placed around them relative to one another for assembly, a separate holding pouch (6, 7) being provided for each traction means wheel (2, 3) on the holding device (1), which holding pouches (6, 7) surround at least a peripheral region of the respectively associated traction means wheel (2, 3) in such a way that the traction means wheels (2, 3) can be inserted radially to the axes of rotation thereof into the holding pouches (6, 7), **characterised in that** at least one latching holding element (15) is associated with at least one holding pouch (7), which latching holding element (15) can be moved by a predetermined assembly force substantially in the axial direction of the traction means wheel (3) to insert the traction means wheel (3) into the holding pouch (7) and which, in the unloaded state, surrounds a peripheral region of the traction means wheel (3) in an interlocking manner and positions it in a captive manner in the holding pouch (7).

2. Traction means transmission unit according to claim 1, **characterised in that** the latching holding element (15) has a resiliently arranged ramp region (18) via which the traction means wheel (3) slides away upon insertion into the holding pouches (7). and thus substantially cushions the latching holding element (15) in the axial direction of the traction means wheel (3).

3. Traction means transmission unit according to claim 1 or 2, **characterised in that** the holding device (1) has a plate-like basic member (5), beyond the plate surface plane of which, predetermined by the basic member, the holding pouches (6, 7) and/or the ramp region (18) of the latching holding element (15) project.

4. Traction means transmission unit according to claim 1 to 3, **characterised in that** the latching holding element (15) is formed in the manner of a spring tongue connected on one side to the plate-like basic member (5).

5. Traction means transmission unit according to any one of claims 1 to 4, **characterised in that** the latching holding element (15) is arranged inside a recess (20) of the basic body (5), the recess (20), seen in plan view, having a larger area than the latching holding element (15) so it can catch in the recess (20).

6. Traction means transmission unit according to any one of claims 1 to 5, **characterised in that** the latching holding element (15), seen in plan view, is virtually trapezoidal in design, the short side (16) being the connection point to the basic member and the long side (19) being bent convexly to rest on a peripheral region of the traction means wheel (3).

7. Traction means transmission unit according to any one of claims 1 to 6, **characterised in that** the basic member (5) is arranged parallel next to the traction means (4) and the latching holding element, proceeding from the connection point (16) to the basic member (5) initially extends in a plane with the basic member (5) and then bends off into the ramp region (18), the overall height of which is between half and the whole of the width of the traction means.

8. Traction means transmission unit according to any one of claims 1 to 7, **characterised in that** the side of the latching holding element (15) facing the traction means wheel (3) is designed to be larger in area than the cross-sectional area of the ramp region (18) to increase the contact face.

9. Traction means transmission unit according to any one of claims 1 to 8, **characterised in that** at least one holding pouch (6) is formed from at least two pouch portions (8, 9) which are arranged spaced from one another and arranged offset around the axis of the associated traction means wheel (3).

10. Traction means transmission unit according to any one of claims 1 to 9, **characterised in that** the pouch portions (8, 9) are formed as elements which are L-shaped in cross-section and arranged with one L-leg on the basic member (5), the other L-leg and the basic member circumscribing a duct for receiving the traction means wheel (3) with traction means (4) placed around it.

11. Traction means transmission unit according to any one of claims 1 to 10, **characterised in that** two traction means wheels (2, 3) are arranged on the holding device (1) and the latching holding element (15) is arranged symmetrically to an axis of symmetry (14) extending through the two central points of the traction means wheels (2, 3).

12. Traction means transmission unit according to any one of claims 1 to 11, **characterised in that** the traction means wheels (2, 3) are chain wheels and the traction means (4) is a chain.

13. Traction means transmission unit according to any one of claims 1 to 12, **characterised in that** further elements, such as, for example, fixing rails or guide rails, traction means clamps or similar, are arranged on the basic member.

14. Basic member for a traction means transmission unit according to any one of claims 1 to 13, **characterised by** at least two holding pouches (6, 7) for traction means wheels (2, 3) and at least one latching holding element (15) associated with at least one holding pouch (7), the latching holding element (15) being movable by a predetermined assembly force substantially in the axial direction of the traction means wheel (3) to insert the traction means wheel into the holding pouch (7) and which, in the unloaded state, surrounds a peripheral region of the traction means wheel (3) in an interlocking manner and positions it in a captive manner in the holding pouch (7).

15. Traction means transmission unit, in particular according to any one of claims 1 to 13, **characterised in that** a pivotally arranged fixing rail (24) is attached to the holding element (1), and **in that** cooperating latching devices (28, 30) are provided on the holding element (1) and the fixing rail (24) to pre-position the fixing rail (24) on the holding element (1) in an assembly position in such a way that the fixing rail (24) is arrested against pivoting back counter to the fixing direction (S) in the assembly position and the fixing rail (24) can continue to pivot in the fixing direction (S) in the assembly position.

16. Traction means transmission unit according to claim 15, **characterised in that** the assembly position of the fixing rail (24) relative to the holding element (1) predetermined by the latching devices (28, 30) is selected in such a way that the fixing rail (24) exerts a pretensioning on the traction means (4).

17. Traction means transmission unit according to claim 15 or 16, **characterised in that** the latching device (28) of the holding element (1) is a ramp-like latching nose, the undercut (29) of which substantially points to the traction means (4) in the fixing direction (S) and **in that** the fixing rail (24) correspondingly has the latching recesses (30) which can be latched with the latching nose (28) in the assembly position.

18. Traction means transmission unit according to any one of claims 15 to 17, **characterised in that** a pivotal connection (27) between the holding element (1) and fixing rail (24) is designed in such a way that owing to the fixing rail (24), a slight pivotal movement substantially perpendicular to the fixing direction (S) can be carried out in addition to the pivotal movement in the fixing direction (S), the slight pivotal movement being just large enough for the latching devices (28, 30) to latch together.

19. Traction means transmission unit according to claim 18, **characterised in that** the pivotal connection (27) is made in such a way that the slight pivotal movement is counter to a spring restoring force.

## Revendications

1. Unité de transmission pré-assemblée comportant au moins deux roues d'entraînement (2, 3), un moyen d'entraînement (4) placé à la fois autour des roues d'entraînement (2, 3) et un dispositif de retenue (1) permettant le pré-positionnement des roues d'entraînement (2, 3) les unes par rapport aux autres avec des moyens d'entraînement (4) placés autour pour le montage, un logement de retenue (6,7) séparé étant prévu au niveau du dispositif de retenue (1) pour chaque roue d'entraînement (2, 3), lequel entoure au moins une zone périphérique de la roue d'entraînement (2, 3) qui y est disposée, de façon telle que les roues d'entraînement (2, 3) peuvent être insérées dans les logements de retenue (6, 7) radialement par rapport à leur axe de rotation, **caractérisée en ce qu'**au moins un élément de retenue par encliquetage (15) est associé à au moins un logement de retenue (7), lequel élément est essentiellement mobile dans la direction axiale de la roue d'entraînement (3) pour insérer la roué d'entraînement (3) dans le logement de retenue (7) par une force de montage prédéterminée, entoure à l'état non chargé une zone périphérique de la roue d'entraînement (3) par engagement de forme, et positionne celle-ci dans le logement de retenue (7) de façon imperdable.

2. Unité de transmission selon la revendication 1, **caractérisée en ce que** l'élément de retenue par encliquetage (15) présente une zone de rampe (18) disposée de façon élastique, par dessus laquelle la roue d'entraînement (3) glisse lors de l'insertion dans le logement de retenue (7) et enclenche de ce fait à la façon d'un ressort l'élément de retenue par encliquetage (15), essentiellement dans la direction axiale de la roue d'entraînement (3).

3. Unité de transmission selon la revendication 1 ou 2, **caractérisée en ce que** le dispositif de retenue (1) présente un corps de base (5) en forme de plaque, les logements de retenue (6, 7) et/ou la zone de rampe (18) de l'élément de retenue par encliquetage (15) dépassant au-dessus du plan de plaque prédéfini par le corps de base.

4. Unité de transmission selon l'une des revendications 1 à 3, **caractérisée en ce que** l'élément de retenue par encliquetage (15) est conçu selon le type d'une lame d'aiguillage reliée d'un côté au corps de base (5) en forme de plaque.

5. Unité de transmission selon l'une des revendications 1 à 4, **caractérisée en ce que** l'élément de retenue par encliquetage (15) est disposé à l'intérieur d'un évidement (20) du corps de base (5) qui, en vue de dessus, présente une surface plus grande que l'élément de retenue par encliquetage (15), de sorte que celui-ci peut se s'enclencher à la façon d'un ressort dans l'évidement (20).

6. Unité de transmission selon l'une des revendications 1 à 5, **caractérisée en ce que** l'élément de retenue par encliquetage (15), en vue de dessus, est conçu presque en forme de trapèze, le côté court (16) représentant le point de raccordement au corps de base et le côté long (19) étant courbé de façon convexe pour se placer au niveau d'une zone périphérique de la roue d'entraînement (3).

7. Unité de transmission selon l'une des revendications 1 à 6, **caractérisée en ce que** le corps de base (5) est disposé en parallèle près du moyen d'entraînement (4) et **en ce que** l'élément de retenue par encliquetage (15), en partant du point de raccordement (16) avec le corps de base (5), s'étend d'abord dans un plan avec le corps de base (5) puis s'incline dans la zone de rampe (18), dont la hauteur totale est comprise entre la moitié de la largeur du moyen d'entraînement et sa largeur totale.

8. Unité de transmission selon l'une des revendications 1 à 7, **caractérisée en ce que** le côté de l'élément de retenue par encliquetage (15) orienté vers la roue d'entraînement (3), pour augmenter la surface d'appui, est conçu avec une surface plus grande par rapport à la surface de la section transversale de la zone de rampe (18).

9. Unité de transmission selon l'une des revendications 1 à 8, **caractérisée en ce qu'**au moins un logement de retenue (6) est formé par au moins deux segments de logement (8, 9) disposés en formant un écart entre eux, lesquels sont disposés de façon décalée autour de l'axe de la roue d'entraînement (3) qui y est coordonnée.

10. Unité de transmission selon l'une des revendications 1 à 9, **caractérisée en ce que** les segments de logement (8, 9) sont conçus en tant qu'éléments en forme de L en coupe, disposés avec une branche en L sur le corps de base (5), l'autre branche en L et le corps de base (5) délimitant un canal de réception de la roue d'entraînement (3) avec le moyen d'entraînement (4) disposé autour.

11. Unité de transmission selon l'une des revendications 1 à 10, **caractérisée en ce que** deux roues d'entraînement (2 ,3) sont disposées sur le dispositif de retenue (1) et **en ce que** l'élément de retenue par encliquetage (15) est disposé symétriquement par rapport à un axe de symétrie (14) passant par les deux points médians des roues d'entraînement (2, 3).

12. Unité de transmission selon l'une des revendications 1 à 11, **caractérisée en ce que** les roues d'entraînement (2, 3) sont des roues à chaîne et **en ce que** le moyen d'entraînement (4) est une chaîne.

13. Unité de transmission selon l'une des revendications 1 à 12, **caractérisée en ce que** sont disposés sur le corps de base (5) d'autres éléments, comme par exemple des rails tendeurs ou des glissières, des tendeurs de moyen d'entraînement ou équivalent.

14. Corps de base pour une unité de transmission selon l'une des revendications 1 à 13, **caractérisé par** au moins deux logements de retenue (6, 7) pour les roues d'entraînement (2, 3) et au moins un élément de retenue par encliquetage (15) associé à au moins un logement de retenue (7), lequel peut se déplacer essentiellement dans la direction axiale de la roue d'entraînement (3) pour insérer la roue d'entraînement dans le logement de retenue (7) par une force de montage prédéterminée, et entoure par engagement de forme à l'état non chargé une zone périphérique de la roue d'entraînement (3) et place celle-ci dans le logement de retenue (7) de façon imperdable.

15. Unité de transmission, en particulier selon l'une des revendication 1 à 13, **caractérisée en ce qu'**est appliqué contre un élément de retenue (1) un rail tendeur (24) disposé de façon à pouvoir pivoter, et **en ce qu'**existent des dispositifs d'encliquetage (28, 30), agissant de façon concourante au niveau de l'élément de retenue (1) et du rail tendeur (24) pour pré-positionner le rail tendeur (24) contre l'élément de retenue (1) dans une position de montage, de façon telle que le rail tendeur (24) est bloqué contre un pivotement en retour à l'opposé de la direction de tension (S) dans la position de montage, et qu'un pivotement du rail tendeur (24) est en outre possible dans la position de montage dans la direction de tension (S).

16. Unité de transmission selon la revendication 15, **caractérisée en ce que** la position de montage du rail tendeur (24) par rapport à l'élément de retenue (1), prédéterminée par les dispositifs d'encliquetage (28, 30), est sélectionnée de façon telle que le rail tendeur (24) exerce une pré-tension sur le moyen d'entraînement (4).

17. Unité de transmission selon la revendication 15 ou 16, **caractérisée en ce que** le dispositif d'encliquetage (28) de l'élément de retenue (1) est un taquet d'encliquetage en forme de rampe dont la contre-dépouille (29) affecte essentiellement le moyen d'entraînement (4) dans la direction de tension (S) sur et **en ce que** le rail tendeur (24) présente un évidement d'encliquetage correspondant (30), qui peut s'encliqueter avec le taquet d'encliquetage (28) dans la position de montage.

18. Unité de transmission selon l'une dès revendications 15 à 17, **caractérisée en ce qu'**une liaison orientable (27) est exécutée entre l'élément de retenue (1) et le rail tendeur (24) de façon telle que par le rail tendeur (24), outre le déplacement de pivotement dans la direction de tension (S), puisse également être exécuté un léger déplacement de pivotement essentiellement perpendiculaire à la direction de tension (S), le léger déplacement de pivotement étant exactement d'une dimension permettant aux dispositifs d'encliquetage (28, 30) d'être encliquetés ensemble.

19. Unité de transmission selon la revendication 18, **caractérisée en ce que** la liaison orientable (27) est exécutée de façon telle que le léger déplacement de pivotement se produit contre la force de rappel d'un ressort.
